Europäisches Patentamt

European Patent Office

Office européen des brevets

(19)

(11) Publication number: **0 012 975**
**B1**

## EUROPEAN PATENT SPECIFICATION

(12)

(45) Date of publication of patent specification: **27.01.82**

(51) Int. Cl.³: **G 11 B 5/60, G 11 B 5/55**

(21) Application number: **79105227.7**

(22) Date of filing: **17.12.79**

(54) Transducer head suspension assembly.

(30) Priority: **29.12.78 US 974600**
**19.09.79 US 76719**

(43) Date of publication of application:
**09.07.80 Bulletin 80/14**

(45) Publication of the grant of the European patent:
**27.01.82 Bulletin 82/4**

(84) Designated Contracting States:
**DE FR GB**

(56) References cited:
**US - A - 3 896 495**
**US - A - 3 984 872**
**US - A - 4 058 843**
**US - A - 4 089 029**

(73) Proprietor: **International Business Machines Corporation**
**Armonk, N.Y. 10504 (US)**

(72) Inventor: **King, Francis Kong**
**2771 Middleborough Circle**
**San Jose, California 95132 (US)**
Inventor: **Wanek, Donald John**
**1843 26th Street N.W.**
**Rochester, Minnesota 55901 (US)**

(74) Representative: **Petersen, Richard Courtenay**
**IBM United Kingdom Patent Operations Hursley Park**
**Winchester Hants. SO21 2JN (GB)**

Courier Press, Leamington Spa, England.

## Transducer head suspension assembly

This invention relates to transducer head suspension assemblies, particularly, though not exclusively, for magnetic transducers effective on flexible magnetic disks.

It has been previously proposed, in U.S. Patent Specification No. 4,089,029 (Catrodale et al), to mount a magnetic transducer on a cantilever gimbal spring having a pair of opposite parallel extending leg portions connected by a transverse leg portion on which the transducer is fixed. These leg portions provide resilience against the pitching of the transducer on the disk with which it makes contact (up and down movements of the leading and trailing ends of the transducer along the magnetic track for the transducer) and also provide resilience against and allowing a rolling movement of the transducer on an axis extending at a tangent to the magnetic track. A spring loaded relatively rigid load arm applies a force to the transducer urging it into forceful contact with the disk, and this is done by means of a dimple and a flange portion on the load arm forming a type of universal joint, so that the transducer can quite freely pitch and roll without any influence on such movement by the load arm.

It has also been proposed, in U.S. Patent Specifications Nos. 3,896,495 (Beecroft) 3,914,792 (Beecroft), and 3,984,872 (Beecroft) to provide a transducer head suspension assembly comprising a transducer head carried by a gimbal spring of generally flat thin resilient material attached to a rigid support and restraining movement of the transducer head in pitch and roll and translation along an axis normal to the face of the transducer head, and a backup coil spring to assist the gimbal spring.

The backup coil spring acted on the gimbal spring through a pivoted intermediate arm, so that during translation of the transducer head, the contact between the gimbal spring and the intermediate arm had, besides a translation along an axis normal to the face of the transducer head, a sideways movement normal to said axis, and thus applied a sideways thrust on the gimbal spring.

To ensure an accurate positioning of the transducer head, it is important to reduce substantially, and desirably to eliminate, such sideways thrust. This is particularly the case where the transducer is for use for a flexible magnetic disk which may be subject to considerable movement in directions parallel to the axis of rotation of the disk.

According to the invention, therefore, a transducer head suspension assembly comprising a transducer head carried by a gimbal spring of generally flat thin resilient material attached to a rigid support and restraining movement of the transducer head in pitch and roll and translation along an axis normal to the face of the transducer head, and a backup spring to assist the gimbal spring, is characterised in that the backup spring is made of generally flat thin resilient material and comprises substantially parallel, (when viewed substantially normal to the general plane of the material) connected first, second and third leg means, the first leg means comprising two parallel and spaced apart first legs and the second leg means comprising two parallel and spaced apart second legs in the space between the first legs, each leg being connected at one end to one end of the adjacent second leg and the third leg means being connected at one end to the other ends of the second legs and being bent out of the plane of the second legs, and the backup spring is assembled in the rigid support in stressed condition with the other ends of the first legs being fixed to the rigid support and with the other end of the third leg means being in contact with the gimbal spring, whereby said translation of the transducer head causes flexure of the first and second legs and translation of the end of the third leg means in contact with the gimbal spring along or parallel to said axis.

Preferably, the backup spring is of symmetrical construction.

It is also advantageous to provide a symmetrical gimbal spring on which the transducer is mounted symmetrically so that the resilience of the gimbal spring is uniform for pitching and rolling of the transducer.

For this purpose, the gimbal spring may have a central and two end parallel legs, the central leg carrying the transducer adjacent its middle and the end legs having ears extending normal from the middle thereof and fixed to the rigid support.

In an embodiment of the invention, the backup spring is effective on the gimbal spring, and thus on the transducer, by means of a universal joint comprising a dimple on the gimbal spring and an associated flange portion of the backup spring extending normal to the main axis of the transducer, with the backup spring being of such dimensions and arrangement of parts that the flange portion remains parallel with its original position even though substantial translation of the disk (in a direction perpendicular to its plane and parallel with its axis) takes place.

It has been found advantageous also to form the transducer head with two lands as the active face to contact a rotatable disk. In such case, one of the lands may be wider than the other, with the transducer in the narrower land. With such a construction, the dimple on the gimbal spring may be offset from the central axis of the transducer head towards the side on which the wider land is located.

It has also been found advantageous to locate the dimple on the gimbal spring closer to the leading edge of the transducer head.

The invention may also be seen to provide a transducer support carriage comprising a swingable arm carrying the transducer head suspension assembly, with the carriage having abutment surfaces and portions on which the swingable arm is supported in its position in which the transducer carried thereby is engaged with the disk so that the arm is fixed in this position and does not provide an element of movement to the transducer under these conditions.

The scope of the invention is defined by the appended claims; and how it can be carried into effect is hereinafter particularly described with reference to the accompanying drawings, in which:—

Figure 1 is a longitudinal sectional view (taken on line I—I of Figure 2) of a carriage for supporting a pair of transducers in effective contact with a magnetic disk between the transducers and including a pair of swing arms on each of which one of the transducers is mounted by means of a transducer head suspension assembly according to the invention;

Figure 2 is a plan view on the line II—II of Figure 1;

Figure 3 is a plan view on the lines III—III of Figure 1;

Figure 4 is a perspective view, partly broken away, of the transducer head suspension assembly shown in Figure 2;

Figure 5 is a longitudinal sectional view on the line V—V of Figure 4;

Figure 6 is a plan view of the gimbal spring of the transducer head suspension assembly on the line VI—VI of Figure 5;

Figure 7 is a plan view of the backup spring of the transducer head suspension assembly, in unstressed condition;

Figure 8 is a side elevational view of the backup spring of Figure 7, in unstressed condition; and

Figure 9 is a diagrammatic side elevational view of the backup spring of Figure 7, in stressed condition.

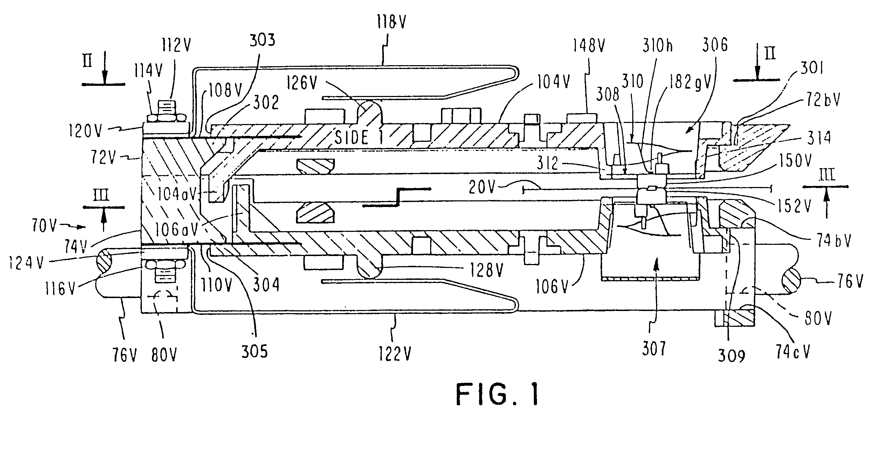

A transducer carriage 70V (Figure 1) is similar to the transducer carriage 70 described and shown in United States Patent Specification No. 4,089,029 (Castrodale et al) and may be used instead of that carriage in the data storage apparatus disclosed in the patent specification. Parts of the carriage 70V with the suffix V after their reference characters correspond to parts similarly numbered but without the suffix in the U.S. patent specification. The carriage 70V includes two carriage parts 72V and 74V of rigid material, which are fixed together by bolts 112V and nuts 114V and 116V. The part 74V has pairs of openings 80V to receive guide rods 76V on which the carriage 70V is reciprocably mounted. The carriage 70V includes the swing arms 104V and 106V of rigid material pivoted with respect to the parts 72V and 74V by leaf springs 108V and 110V. The spring 108V fits over the bolts 112V and beneath the nuts 114V along with a spacer 120V and a leaf return spring 118V. The spring 110V fits over the bolts 112V beneath the nuts 116V along with a spacer 124V and a leaf return spring 122V. The return springs 118V and 122V differ from the equivalent springs shown in the U.S. Patent Specification in being longer and reverse bent. Their ends bear on protrusions 126V and 128V on the swing arms 104V and 106V. The arms 104V and 106V swing outwardly with respect to each other with flexing of the springs 108V and 110V, and coacting arm portions 104aV and 106aV are provided on the arms 104V and 106V for causing the arm 106V to swing outwardly when the arm 104V is swung outwardly. A hook 148V is provided on the arm 104 by means of which the arm 104V can be swung outwardly away from the arm 106V. The carriage parts 72V and 74V are respectively provided with abutment surfaces 72bV and 74bV for limiting the approaching swinging movement of the arms 104V and 106V, and the part 74V is provided with an abutment surface 74cV for limiting the outward movement of the swing arm 106V.

Portions 302 and 304 of the parts 72V and 74V respectively underlie the base ends 303 and 305 of the arms 104V and 106V respectively and support the base ends in the positions of the arms 104V and 106V in which the distal arm ends 301 and 307 are supported by the surfaces 72bV and 74bV.

The arm 104V carries a transducer head 150V which contacts a magnetic disk 20V, and the arm 106V carries a similar transducer head 152V. The transducer heads 150V and 152V are directly opposite each other on the opposite sides of the disk 20V. The nominal plane of the disk 20V is parallel with the guide rods 76V, on which the carriage 70V is slidably mounted. The transducer head 150V is supported with respect to the arm 104V by means of a spring suspension 306, and the transducer head 152V is supported with respect to the arm 106V by means of a spring suspension 307. The suspensions 306 and 307 are identical with the exception that they are simply turned through 180° with respect to each other.

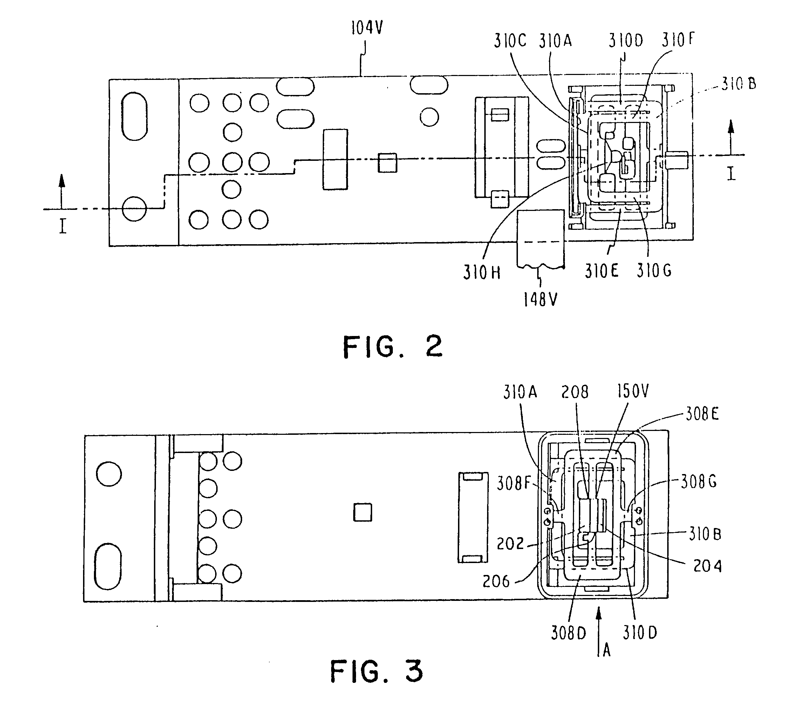

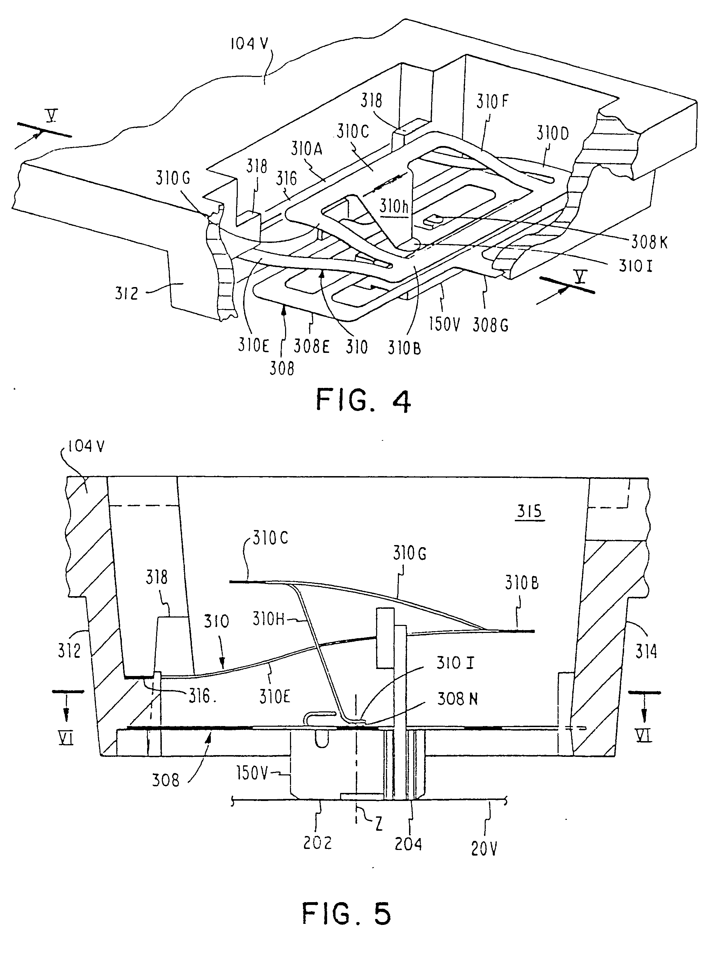

The transducer head 150V has two lands 202 and 204 (Figure 3) which extend in a direction substantially parallel to the direction of movement A of the disk 20V relative to the transducer head from a leading edge 206 of the head to a trailing edge 208 of the head. In the direction transverse to the direction A, the land 202 (Figure 5) is slightly wider than the land 204, which contains the elements of the transducer. In a particular embodiment, the land 202 is 0.75 mm wide and the land 204 is 0.5 mm wide. The central axis Z of the transducer head is closer to the land 202 than the land 204.

The faces of the lands 202 and 204 contact one surface of the disk 20V and together form the active front face of the transducer head.

The transducer head 152V is identical, and the faces of the lands of transducer head 152V contact the other surface of the disk 20V with the central axis of the head 152V aligned with the central axis Z of the head 150V. The face of the wider land of head 152V opposes the narrower land 204 of head 150V and the wider land 202 of head 150V opposes the narrower land of head 152V.

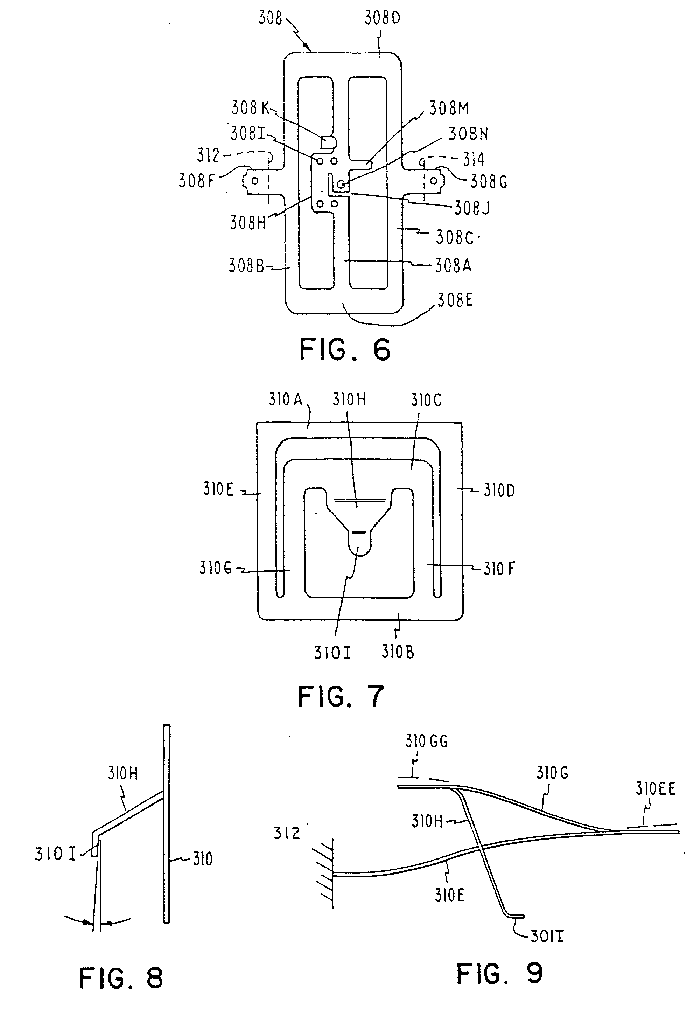

The suspension 306 comprises a sheet metal gimbal spring 308, which is flat in unstressed condition and is generally in the form of a figure eight, and a bi-directionally extending backup spring 310. The spring 308 (Figure 6) consists of a central leg 308A, two side legs 308B and 308C, two end legs 308D and 308E connecting the legs 308A, 308B and 308C and two mounting tabs or ears 308F and 308G. The leg 308A has an enlargement 308H, and the transducer head 150V is fixed at its back to the under surface of the leg 308A and enlargement 308H by bonding material extending through holes 308I in the leg 308A and enlargement 308H.

The leg 308A is considerably longer in the direction A than the length of the transducer head 150V which is nearly coextensive, insofar as its length is concerned, with the enlargement 308H. The ratio of the length of the leg 308A to the length of the transducer head 150V may be nearly 4 to 1, for example. The lengths of the legs 308A, 308B and 308C are equal and the legs have substantially the same widths so that, apart from the enlargement 308H, the spring 308 is symmetrical. The end legs 308D and 308E are wider and considerably shorter than the legs 308A, 308B and 308C. The leg 308A is located centrally with respect to the legs 308D and 308E and the ears 308F and 308G are located centrally with respect to the legs 308B and 308C and extend outwardly from and at right angles to these two legs. The ears 308F and 308G and the legs 308D and 308E have substantially the same widths. The resistance to flexing of the ears 308F and 308G and the legs 308A to 308E varies proportionally to the widths of these legs and ears, because the spring 308 is formed of a single piece of uniform thickness spring metal. The arm 104V is formed with a through hole 315 having a pair of flanges 312 and 314 (Figure 5), and the ears 308F and 308G are moulded into these flanges so that the portions of the ears 308F and 308G (Figure 6) outside the flanges 312 and 314 are relatively short in length, slightly less than twice the widths of the legs 308A, 308B and 308C.

The leg 308A has a dimple 308N pressed into it, and this dimple is located slightly offset from the central axis of the transducer head 150V, being located 0.05 mm from the central axis Z towards the wider land 202 and 0.1 mm closer to the leading transducer edge 206 (Fig. 3) than to the trailing transducer edge 208. The length and width of the transducer head in plan are 5 mm and 3.5 mm respectively. The offset relationship of the dimple 308N to the transducer head 150V is such as to maintain the lands 202 and 204 in substantially uniform pressure on the disk 20V, even with the transducer head slightly flying with respect to the disk 20V with high disk speeds. An L-shaped slot 308J is cut in the leg 308A to extend around the area of the dimple 308N for the purpose of preventing buckling of the leg 308A and of the enlargement 308H during punching of the dimple 308N out of the plane of the metal of the spring 308. The leg 308A has a U-shaped lug portion 308K formed on it for clamping wiring to the transducer and also has an earthing ear 308M formed on it.

The spring 310 (Figure 4) is also formed of a single sheet metal piece and comprises three parallel legs 310A, 310B and 310C. End legs 310D and 310E connect the legs 310A and 310B, and end legs 310F and 310G connect the legs 310D and 310C. In plan (Figure 7) the legs 310D, 310F, 310G and 310E extend parallel with each other and at right angles to the legs 310A, 310B and 310C. The leg 310A is mounted on a shelf 316 of the flange 312 (Figure 5) and is held thereon by posts 318. The legs 310D and 310E are spaced apart and extend from the leg 310A beyond the transducer head 150V to the leg 310B. The legs 310F and 310G are spaced apart inwardly of the legs 310D and 310E and extend from the leg 310B past the transducer head 150V to the leg 310C. A leg 310H extends from the middle of the leg 310C downwardly towards the transducer head 150V and terminates at its distal end in a flange portion 310I that contacts the dimple 308N. The flange portion 310I extends substantially parallel with the spring 308 and with the plane of the disk 20V, and the flange portion 310I and the dimple 308N form a type of universal joint connection between the backup spring and gimbal spring carrying the transducer head.

The suspension 307 is the same as the assembly 306, being simply turned through 180° with respect to suspension 306; and the transducer heads 150V and 152V bear on each other or against the opposite faces of the disk 20V due principally to the backup springs bearing on the dimples in each suspension, so that there may be a data transferring action between the transducers and the disk 20V.

When the spring 310 is assembled in the flange 312, the legs 310D, 310E, 310F and 310G are flexed outwardly in the direction away from the gimbal spring 308 because of the restraining action of the gimbal spring 308. Before this assembly operation, the gimbal spring 308 is in its flat unstressed disposition with the ears 308F and 308G anchoring the gimbal spring 308 in the hole 315. Initially, the spring 310 when in unflexed condition is flat (Figure 7) with the exception of the leg 310H and its flange 310I. The spring 310 may be etched from a uniform thickness of spring sheet metal in this condition except for the leg 310H and its flange 310I which are bent from the initial flat thickness of stock so that the parts 310H and 310I depend from the plane of the legs. The flange 310I in this unstressed condition of the spring 310 extends at a small angle $\alpha$ (such as 4°) with respect to a plane parallel to the legs. When the spring 310 is assembled in the hole 315, the one ends of the legs 310D and 310E are fixed with respect to the flange 312 and the flange 310I is in contact with the dimple 308N of the gimbal spring. The leg 310C is forced outwardly in the direction away from the gimbal spring 308, together with the one ends of the legs 310F and 310G connected thereto. With the one ends of the legs 310D and 310E fixed and the leg 310C forced outwardly, the legs 310D, 310E, 310F and 310G are flexed to that their other ends, connected by the leg 310B, moved outwardly in the same direction but to a lesser extent (approximately one half) than the leg 310C. With the spring 310 being thus stressed, the flange portion 310I extends substantially parallel with the nominal plane of the gimbal spring 308. Because the gimbal spring 308 supports the backup spring 310 in its disposition as thus flexed, the gimbal spring 308 is depressed out of exact flatness, assuming that the transducer head 150V is not in engagement with the disk 20V. When the arms 104V and 106V are moved together, the gimbal spring 308 and the backup spring 310 for the transducer head 150V are moved into their dispositions shown in Figure 5, with the gimbal spring 308 being substantially flat, due to the forces exerted by the two transducer heads 150V and 152V on each other through the flexible disk 20V, with the transducer heads being supported by gimbal springs and backup springs.

Figure 9, which shows an exaggerated disposition of the backup spring 310, may be referred to for an understanding of the manner in which the backup spring 310 flexes when it is thus being loaded onto the dimple 308N and during its subsequent operation in holding the transducer head 150V in contact with the flexible disk 20V and opposite to and against the force of the transducer head 152V which is similarly loaded. Leg 310E is anchored in the flange 312, and if leg 310E were the only leg in the system with the leg 310H extending from its other unfixed end, it would act like a simple cantilever beam and would swing up when force is applied to its far end, shortening itself and rotating its far end. This is shown by the dotted position 310EE. Because the leg 310E would be swung outwardly away from the gimbal spring 308, its far end would be translated closer to the flange 312. This would result in a sideways and rotational movement of the flange 310I.

In a similar way, if the leg 310G were the only leg in the system with its end remote from the leg 310H fixed, it would act like a simple cantilever beam and would swing up when force is applied to its free end, shortening itself and rotating its free end. This is illustrated by the dotted position 310GG. Because the leg 310G would be swung outwardly from the gimbal spring 308, its free end would be translated away from the flange 312. This would result in a sideways and rotational movement of the flange 310I.

The same considerations apply if two legs 310D and 310E joined by leg 310B or two legs 310F and 310G joined by leg 310C are the only legs in the system.

In the embodiment of the invention, rotation of the other ends of the legs 310D and 310E joined by the leg 310B is restrained by the legs 310F and 310G, and rotation of the one ends of the legs 310F and 310G joined by the leg 310C is restrained by the legs 310D and 310E. As a result, the legs 310B and 310C are substantially parallel with the plane of the gimbal spring 308, and the legs 310D and 310E and the legs 310F and 310G are given a double curvature or very flattened S shaped disposition.

As the legs 310E and 310G extend with opposite curvature from the leg 310B and the leg 310G is doubled back with respect to the leg 310E, the two translations of the ends of the legs 310E and 310G in effect cancel and compensate for each other. There are also substantially equal and opposite rotations of the ends of the two legs 310E and 310G, due to the effect of the leg 310G on the leg 310E and due to the effect of the leg 310E on the leg 310G, and the rotational effects are overcome. The legs 310D and 310F are similar to the legs 310E and 310G and function in the same manner for applying a force to the leg 310H. Rotation and sideways movement of the flange 310I are thus substantially eliminated. For these reasons, the flange 310I resting on the dimple 308N goes through a very uniform motion perpendicular to the plane of the gimbal spring 308, with very small sideward motion and forces by the flange on the dimple. The legs 310E, 310G and 310H are in effect connected serially, as are the legs 310D, 310F and 310H. The legs 310D, 310E, 310F and 310G provide a balanced construction, with the legs 310E and 310D on opposite sides and with the legs 310G and 310F on opposite sides so that the upper portion of the transducer (Figure 5) does not interfere with these legs. The central leg 310H is tapered and in effect is about twice the width of each of the legs 310D, 310E, 310F and 310G and thus amounts to a combination equal to the opposite pairs of legs 310F and combination equal to the opposite pairs of legs 310F and 310G. Since the leg 310H is considerably shorter than the other functional legs 310D, 310E, 310F and 310G, and is disposed at a small angle to a line perpendicular to the plane of the gimbal spring 308, leg 310H has a relatively small amount of deflection and bending in comparison with the deflection and bending of the other legs. The leg 310H doubles back on the legs 310F and 310G and does not interfere with the upper portion of the transducer in resting on the dimple 308N. As the legs 310I and 310E are anchored in the flange 312, the leg 310A could be omitted if desired. The leg 310B integrally connects the legs 310E and 310G and also integrally connects legs 310D and 310F and is important from the standpoint as previously described. The central portion of the leg 310B between the legs 310F and 310G simply functions as a connector to connect the legs on the two sides together. The leg 310C is important from the standpoint of transmitting rotational force from the legs 310F and 310G to the central leg 310H as above mentioned. Thus the flange portion 310I applies a force onto the dimple 308N, tending to hold the transducer head 150V against the transducer head 152V which has the spring suspension 307 acting on it.

In operation with a rotating disk 20V and particularly if the disk is of relatively flexible material, the body of the disk may be subject to translation in a direction perpendicular to the plane of the disk, to rippling movement tilting about radial axes, and to out-of-plane movement tilting about concentric axes. As a portion of the disk passes between the transducer heads in the direction A (Figure 3), the faces of the lands of the transducer heads are held against the surfaces of the disk and the transducer heads are subject to similar translational movement, rippling movement or pitching and out-of-plane movement or rolling.

Translational movement of the transducer head 150V is compensated mainly by the backup spring 310, whose legs 310D, 310E, 310F and 310G flex, and also by flexure of the legs 308D and 308E and ears 308F and 308G of the gimbal spring 308.

Pitching movement of the transducer head 150V is resisted by the gimbal spring 308, whose legs 308A, 308B and 308C flex and whose ears 308F and 308G are torsionally twisted. The torsional flexure of the ears 308F and 308G in particular with subordinate flexure of the legs 308A, 308B and 308C tends to return the transducer head 150V into its original position in which the spring 308 is flat.

Rolling movement of the transducer head 150V is resisted by twisting of the leg 308A and flexure of legs 308D and 308E. This tends to return the transducer head 150V into its original position so that the leg 308A is flat. The transducer 152V has an opposing rolling motion, since the transducers 150V and 152V remain in contact with the opposite faces of the disk 20V, and the spring suspension 307 acts in the same manner with respect to the transducer 152V.

In each case, the transducer head 152V has an equal and opposite movement and the spring suspension 307 acts in an equivalent manner on the transducer head 152V as the spring suspension 306 on the head 150V. Translational movement of one transducer head towards the contact surface of the disk 20V is resisted by the spring suspension of the other transducer head, the spring suspension of the one transducer head acting to hold the one transducer head in contact with the disk 20V.

It will be appreciated that more than one of these movements may occur simultaneously.

As the gimbal spring 308 is substantially symmetrical, the legs 308A, 308B and 308C being of equal lengths and equally spaced, the legs 308D and 308E being equal in length, and the ears 308F and 308G being of equal length and located centrally with respect to the legs 308D and 308E, the resilience of the gimbal spring 308 tends to provide equal forces tending to return the transducer head 150V to its original position in pitching and rolling movements in either direction. During such pitching and rolling movements, the transducer head 150V pivots about the universal joint connection supporting it including the dimple 308N and the flange portion 310I. The widths and lengths of the ears 308F and 308G and of the legs 308A to 308E are such as to provide a proper resilient response to pitching of the transducer head 150. The central leg 308A is relatively long (being about four times as long as the transducer head 150V in the direction A) and thus the central leg 308A provides a proper resilient response to rolling of the transducer head 150V.

Considering the backup spring 310 in plan (Figure 7), it will be observed that the spring leg 310G doubles back on the spring leg 310E and the leg 310F on the leg 310D, so that the spring 310 may be described as having a folded construction, which is particularly evident in elevation from Figure 5.

The backup spring 310 provides a very flat rate spring effective for holding the gimbal spring 308 flat and in its original plane. The disk 20V may translate normal to the disk engaging front face of the transducer head 150V, but due to the folded construction of spring 310V, the flange portion 310I remains substantially parallel with the original plane of the gimbal spring 308 and with the plane of the disk 20V. Thus the flange portion 310I does not exert a side force or act as a cantilever beam and does not move across the dimple 308N appreciably during translation of the disk 20V which would disturb the force relationship between the transducer heads 150V and 152V and would cause the transducer to misregister with the track on the disk. The arrangement of the flat gimbal spring 308 and the folded construction backup spring 310 effectively decouples the rolling and pitching motions of the transducer head 150V and its translation and eliminates an associated transducer roll off track problem. Due to this decoupling, and due to the fact that the backup spring 310 provides a very flat spring rate, the leg 308A which primarily resists and controls transducer rolling and the ears 308F and 308G which primarily resist and control transducer pitching can be tuned to fit particular stiffness design requirements and to satisfy particular transducer-to-disk dynamic response criteria. In addition, the folded construction backup spring 310 provides a relatively compact transducer suspension requiring a minimum length of the arm 104V, and the overall design is relatively economical to manufacture because the suspension 307 is the same as the suspension 306 and because each of the suspensions 306 and 307 consists of only two springs 308 and 310.

The description with respect to transducer head 150V apply equally to transducer head 152V, although it will be realized that the pitching, rolling and translatory movements of the two transducer heads are simultaneous, equal and opposite, because the two transducer heads are aligned with each other on the two opposite sides of the disk and simultaneously engage the opposite surfaces of the disk primarily under force from the backup spring in each suspension 306 and 307.

When the swing arms 104V and 106V are in their positions of closest approach for data transfer (Figure 1), they are firmly supported with respect to the parts 72V and 74V, respectively, because the base ends 303 and 305 bear on the parts 72V and 74V respectively while the distal ends 301 and 309 bear on the abutment surfaces 72bV and 74bV. Thus, the transducer heads 150V and 152V are held firmly aligned with the carriage parts 72V and 74V and with their active faces normally exactly parallel with each other without any deviations that flexings of the springs 108V and 110V might provide.

The placement of the dimple 308N slightly to the left of the axis Z (Figure 5) and slightly closer to the leading edge 206 than to the trailing edge 208 results in the lands 202 and 204 having substantially uniform pressure relationship for their complete areas with the disk 20V even though the land 202 has more area than the land 204 and even though the leading edge 206 tends to plane away from the disk 20V for high disk speeds promoting a flying condition of the transducer 150V.

## Claims

1. A transducer head suspension assembly comprising a transducer head (150V, 152V) carried by a gimbal spring (308) of generally flat thin resilient material attached to a rigid support (104V, 106V) and restraining movement of the transducer head in pitch and roll and translation along an axis (Z) normal to the face of the transducer head and a backup spring (310) to assist the gimbal spring, characterised in that the backup spring (310) is made of generally flat thin resilient material and comprises substantially parallel (when viewed substantially normal to the general plane of the material), connected first, second and third leg means, the first leg means comprising two parallel and spaced apart first legs (310D, 310E) and the second leg means comprising two parallel and spaced apart second legs (310F, 310G) in the space between the first legs, each first leg being connected at one end to one end of the adjacent second leg and the third leg means (310H) being connected at one end to the other ends of the second legs and being bent out of the plane of the second legs, and the backup spring is assembled in the rigid support in stressed condition with the other ends of the first legs being fixed to the rigid support and with the other end of the third leg means being in contact with the gimbal spring, whereby said translation of the transducer head causes flexure of the first and second legs and translation of the end of the third leg means in contact with the gimbal spring along or parallel to said axis.

2. An assembly according to claim 1, in which the one ends of the first and second legs are connected by a fourth leg (310B).

3. An assembly according to claim 2, in which the other ends of the second legs are connected by a fifth leg (310C).

4. An assembly according to claim 3, in which the third leg means (310H) comprises a single third leg joined to the middle of the fifth leg.

5. An assembly according to claim 4, in which the backup spring is of symmetrical construction.

6. An assembly according to any preceding claim, in which, with the backup spring assembled in the rigid support, the first and second leg means extend in opposite double curvature dispositions away from the gimbal spring.

7. An assembly according to any preceding claim, in which the gimbal spring has a raised dimple adjacent the transducer head, and the third leg means has a flange (310I) at its end, which flange extends substantially parallel to the gimbal spring and engages the dimple.

8. An assembly according to any preceding claim, in which the gimbal spring has a central and two end parallel legs (308A, 308B, 308C), the central leg carrying the transducer adjacent its middle and the end legs having ears (308F, 308G) extending normal from the middle thereof and fixed to the rigid support.

9. An assembly according to claim 8, in which the central leg is substantially longer than the transducer and is connected to the end legs by two side legs (308D, 308E).

## Revendications

1. Dispositif de suspension pour transducteur comprenant un transducteur (150V, 152V) porté par un ressort de suspension (308) en matériau élastique, mince et plat fixé à un support rigide (104V, 106V) et amortissant les mouvements de roulis, de tangage et de translation du transducteur le long d'un axe (Z) perpendiculaire à la face du transducteur et un ressort d'appui (310) coopérant avec ledit ressort de suspension, caractérisé en ce que le ressort d'appui (310) est en matériau élastique, mince et plat et comprend une première, une seconde et une troisième parties reliées les unes aux autres et parallèles (vues en plan), la première des parties comprenant deux premières branches parallèles et espacées (310D, 310E) et la seconde desdites parties comprenant deux secondes branches parallèles et espacées (310F, 310G) disposées dans l'espace compris entre les premières branches, chaque première branche étant reliée par une première extrémité à une première extrémité de la seconde branche adjacente, et la troisième desdites parties (310H) étant reliée par une première extrémité aux autres extrémités des secondes branches et étant courbée hors du plan de ces dernières, et le ressort d'appui est monté sur le support rigide dans une condition de contrainte, les autres extrémités des premières branches étant fixées au support rigide et l'autre extrémité de la troisième desdites parties étant en contact avec le ressort de suspension, de telle sorte que la translation du transducteur provoque une flexion des premières et secondes branches ainsi qu'une translation de l'extrémité de la troisième desdites parties qui se trouve en contact avec le ressort de suspension le long dudit axe ou parallèlement à celui-ci.

2. Dispositif selon la revendication 1, caractérisé en ce que lesdites premières extrémités des premières et secondes branches sont reliées par une quatrième branche (310B).

3. Dispositif selon la revendication 2, caractérisé en ce que les secondes extrémités des secondes branches sont reliées par une cinquième branche (310C).

4. Dispositif selon la revendication 3, caractérisé en ce que ladite troisième partie (310H) comporte une troisième branche reliée au centre de la cinquième branche.

5. Dispositif selon la revendication 4, caractérisé en ce que le ressort d'appui est symétrique.

6. Dispositif selon l'une quelconque des revendications précédentes, caractérisé en ce que, le ressort d'appui étant monté sur le support rigide, lesdites première et seconde parties s'écartent du ressort de suspension en présentant des configurations à double courbure inversée.

7. Dispositif selon l'une quelconque des revendications précédentes, caractérisé en ce que le ressort de suspension comporte un bossage à proximité immédiate du transducteur et en ce que ladite troisième partie comporte à son extrémité une aile (310I) qui s'étend parallèlement au ressort de suspension et porte contre ledit bossage.

8. Dispositif selon l'une quelconque des revendications précédentes, caractérisé en ce que le ressort de suspension comporte une branche centrale et deux branches latérales parallèles (308A, 308B, 308C), le transducteur étant monté au centre de ladite branche centrale et lesdites branches latérales étant pourvues d'oreilles (308F, 308G) qui s'étendent perpendiculairement à leur partie centrale et qui sont fixées au support rigide.

9. Dispositif selon la revendication 8, caractérisé en ce que la branche centrale est plus longue que le transducteur et est reliée par deux autres branches latérales (308D, 308E) aux premières branches latérales.

## Patentansprüche

1. Wandlerkopfaufhängung mit einem Wandlerkopf (150V, 152V), der von einer kardanischen Feder (308) aus im wesentlichen flachem, dünnem, federndem Material getragen ist und an einem steifen Träger (104V, 106V) befestigt ist, wobei eine Bewegung des Wandlerkopfs in einer Wälz-, Roll- und Translationsbewegung entlang einer Achse (Z), die senkrecht zur Ebene des Wandlerkopfs ist, vermieden wird sowie mit einer Belastungsfeder (310) zu Unterstützung der kardanischen Feder, dadurch gekennzeichnet, daß die Belastungsfeder (310) aus im wesentlichen flachem, dünnem, federndem Material herstellt ist und im wesentlichen parallele (gesehen senkrecht zur Hauptebene des Materials), miteinander verbundene erste, zweite und dritte Beinmittel enthält, wobei das erste Beinmittel aus zwei parallelen und voneinander beabstandeten ersten Beinen (310D, 310E) und das zweite Beinmittel aus zwei parallelen und voneinander beabstandeten zweiten Beinen (310F, 310G) im Raum zwischen den ersten Beinen besteht, wobei dabei jedes erste Bein an einem Ende mit einem Ende des benachbarten zweiten Beins verbunden ist, und das dritte Beinmittel (310H) mit einem Ende mit den anderen Enden der zweiten Beine verbunden ist und aus der Ebene der zweiten Beine herausgebogen ist, und daß die Belastungsfeder mit dem steifen Träger in gespannter Lage verbunden ist, wobei sie mit den anderen Enden der ersten Beine am steifen Träger befestigt ist und mit den anderen Enden der dritten Beinmittel in Kontakt mit der kardanischen Feder steht, wobei die genannte Translation des Wandlerkopfs eine Verbiegung der ersten und zweiten Beine verursacht und eine Translation des Endes der dritten Beinmittel in Kontakt mit der kardanischen Feder entlang oder parallel zu der besagten Achse.

2. Anordnung gemäß Anspruch 1, in der die einem Enden der ersten und zweiten Beine durch ein viertes Bein (310B) miteinander verbunden sind.

3. Anordnung gemäß Anspruch 2, in der die anderen Enden der zweiten Beine durch ein fünftes Bein (310C) miteinander verbunden sind.

4. Anordnung gemäß Anspruch 3, bei der die dritten Beinmittel (310H) ein einziges drittes Bein enthalten, das mit der Mitte des fünften Beins vereinigt ist.

5. Anordnung gemäß Anspruch 4, bei der die Belastungsfeder symmetrisch konstruiert ist.

6. Anordnung gemäß einem der vorhergehenden Ansprüche, bei der bei mit dem festen Träger verbundener Belastungsfeder die ersten und zweiten Beinmittel sich in entgegengesetzt doppelt gebogenen Lagen weg von der kardanischen Feder erstrecken.

7. Anordnung gemäß einem der vorhergehenden Ansprüche, bei der die kardanische Feder eine hervorstehende Noppe benachbart zum Wandlerkopf aufweist, und die dritten Beinmittel einen Flansch (310I) an ihrem Ende aufweisen, wobei sich dieser Flansch im wesentlichen parallel zur kardanischen Feder erstreckt und mit der Noppe in Verbindung steht.

8. Anordnung gemäß einem der vorhergehenden Ansprüche, bei der die kardanische Feder ein zentrales und zwei außenliegende parallele Beine (308A, 308B, 308C) aufweist, wobei das zentrale Bein den Wandler in seiner Mitte trägt und die außenliegenden Beine Ohren (308F, 308G) aufweisen die sich senkrecht von der Mitte heraus erstrecken und mit dem steifen Träger verbunden sind.

9. Anordnung gemäß Anspruch 8, bei der das zentrale Bein wesentlich länger als der Wandler ist und mit den außenliegenden Beinen durch zwei Seitenbeine (308D, 308E) verbunden ist.

FIG. 1

FIG. 2

FIG. 3

FIG. 4

FIG. 5

FIG. 6

FIG. 7

FIG. 8

FIG. 9

4